# EUROPÄISCHE PATENTSCHRIFT

(11) **EP 1 345 827 B1**
(45) Veröffentlichungstag und Bekanntmachung des Hinweises auf die Patenterteilung: **26.10.2005**
(21) Anmeldenummer: 01980230.5
(22) Anmeldetag: 02.08.2001
(51) Int. Cl.: B65G 47/244

(54) **VORRICHTUNG ZUM DREHEN FLACHER GEGENSTÄNDE, INSBESONDERE VON FALTSCHACHTELZUSCHNITTEN**
DEVICE FOR TURNING FLAT OBJECTS, IN PARTICULAR, FOLDING BOX BLANKS
DISPOSITIF POUR FAIRE PIVOTER DES OBJETS PLATS, NOTAMMENT DES ELEMENTS DECOUPES DE BOITES PLIANTES

(30) Priorität: 05.09.2000 DE 10043991
(43) Veröffentlichungstag der Anmeldung: 24.09.2003
(73) Patentinhaber: Heidelberger Druckmaschinen Aktiengesellschaft, 69115 Heidelberg (DE)
(72) Erfinder: DIEHR, Wolfgang, 41515 Grevenbroich (DE); COMMANDEUR, Markus, 41812 Erkelenz (DE)
(74) Vertreter: Franzen, Peter
(86) Internationale Anmeldenummer: PCT/EP2001/008966
(87) Internationale Veröffentlichungsnummer: WO 2002/020382

(56) Entgegenhaltungen:
- EP-A- 0 615 929
- EP-A- 0 663 339
- EP-A- 0 881 173
- CH-A- 547 217
- US-A- 4 672 792
- US-A- 4 967 899

## Beschreibung

### Technisches Gebiet

Die Erfindung betrifft eine Vorrichtung zum Drehen flacher Gegenstände, insbesondere von Faltschachtelzuschnitten, mit Förderelementen, die eine luftdurchlässige Förderstrecke bilden und auf denen die Gegenstände flachliegend gefördert werden, mit einer von unten durch die Förderstrecke wirkenden Saugeinrichtung zur Erhöhung der Reibung zwischen den Förderelementen und den Gegenständen und mit Mitteln zum Drehen der Gegenstände um eine Achse senkrecht zur Förderebene.

### Stand der Technik

Bei der Herstellung von Faltschachteln aus Zuschnitten in FaltschachtelKlebemaschinen müssen - je nach Schachtelform - verschiedene mit einem Klebestreifen versehene Faltlappen um 180° gefaltet und mit anderen Zuschnittsteilen verklebt werden. Da die Faltung beim Durchlauf mit hohen Geschwindigkeiten durch die Maschine erfolgt, werden üblicherweise seitlich angeordnete Faltelemente verwendet, von denen die Faltlappen an den Seiten zur Mitte hin umgelegt werden. Die zugehörige Rillinie der seitlichen Faltlappen verläuft daher parallel zur Förderrichtung.

Müssen bei bestimmten Schachtelformen Zuschnittsteile um zwei zueinander senkrechte Rillinien gefaltet werden, beispielsweise neben den Seitenlaschen auch Teile die den Deckel der Schachtel bilden, werden üblicherweise die Zuschnitte zweimal durch die Maschine gefördert; beim zweiten Mal um 90° gedreht, damit sich die zu faltenden Teile jeweils an der Maschinenlängsseite befinden.

Damit derartige Schachteln mit nur einem Durchlauf durch die Maschine vollständig bearbeitet werden können, ist es bekannt, die Schachteln beim Durchlauf vor der zweiten Faltung um 90° zu drehen. Die EP-0 881 173 beschreibt eine Vorrichtung der gattungsgemäßen Art, die zum Drehen der Faltschachteln um bis zu 180° zwei Förderstrecken nebeneinander entlang der Bahn der Gegenstände enthält, deren Geschwindigkeit getrennt einstellbar ist. Die Gegenstände liegen auf beiden Förderstrecken auf, so daß sie bei unterschiedlicher Geschwindigkeit der beiden Förderstrecken um eine Achse senkrecht zur Förderebene gedreht werden. Damit die Gegenstände jeweils die Geschwindigkeit der beiden Förderer annehmen, ist unterhalb der Förderelemente eine Saugeinrichtung angeordnet, die mittels Unterdruck die Reibungskraft zwischen den Förderelementen und den Gegenständen erhöht.

Aus der US-A- 4 672 792 ist eine Vorrichtung zur Drehung von Parketen um 90° bekannt, gemäß dem Oberbegriff des Anspruch 1.

### Darstellung der Erfindung

Der Erfindung liegt die Aufgabe zugrunde, eine Vorrichtung der gattungsgemäßen Art so zu verbessern, daß zur Verringerung der Baulänge eine Drehung mit erhöhter Drehgeschwindigkeit möglich ist.

Diese Aufgabe wird nach der Erfindung dadurch gelöst, daß die Förderelemente nur eine einzige Förderstrecke bilden und daß zumindest an einer Seite neben der Förderstrecke eine im wesentlichen mit der Förderebene fluchtende Gleitfläche verläuft, in der ein taktweise aktivierbares Bremselement angeordnet ist. Mit dem Bremselement ist ein über die Gleitfläche gleitendes Teil des Zuschnitts abbremsbar. Da die übrigen, sich auf den Förderelementen befindlichen Zuschnitteile mit höherer Geschwindigkeit weitergefördert werden, wird eine Drehbewegung der Zuschnitte ausgelöst.

Die Vorrichtung hat den weiteren großen Vorteil, daß auf der seitlichen Gleitfläche eine Ausrichtleiste angeordnet werden kann, mittels der die Zuschnitte zum Abschluß der Drehung, also noch innerhalb der Förderstrecke, seitlich ausgerichtet werden können, um exakt der nachfolgenden Verarbeitungsstation zugeführt zu werden.

Die Unteransprüche enthalten bevorzugte, da besonders vorteilhafte Ausführungsformen der Erfindung.

### Kurze Beschreibung der Zeichnung

Die Zeichnung dient zur Erläuterung der Erfindung anhand eines vereinfacht dargestellten Ausführungsbeispiels:
- Figur 1: zeigt in einer Draufsicht auf die Förderstrecke die Arbeitsweise der Vorrichtung,
- Figur 2: zeigt in einer perspektivischen Darstellung den Aufbau der Vorrichtung, wobei einige Förderrollen nicht eingezeichnet sind, um den unteren Teil der Vorrichtung sichtbar zu machen.

### Wege zur Ausführung der Erfindung

Die Vorrichtung ist Bestandteil einer Faltschachtelklebemaschine zur Herstellung von Faltschachteln aus Zuschnitten, wie sie beispielsweise in der DE 198 28 820-A beschrieben ist. Faltschachtelklebemaschinen enthalten bekannterweise mehrere Bearbeitungsstationen, die von den Zuschnitten/Schachteln nacheinander durchlaufen werden: Zu Beginn einen Einleger, der die zu verarbeitenden Zuschnitte mit hoher Geschwindigkeit aus einem Stapel nacheinander abzieht, anschließend einen sogenannten Vorbrecher, um die Rillinien durch Knicken um 180° weich und geschmeidig zu machen und danach zumindest eine Faltstation, an deren Anfang zunächst ein Klebstoff streifenförmig auf die die verklebenden Faltlappen aufgetragen wird und anschließend die seitlichen Faltlappen zur Mitte hin gefaltet werden. Die flachliegend gefalteten Faltschachteln werden anschließend durch eine Sammel- und Preßeinrichtung geführt, in der sie zum Abbinden des Klebstoffs gepreßt werden.

Die Vorrichtung nach der Erfindung ist bevorzugt in eine Faltschachtelklebemaschine mit zwei Faltstationen integriert und vor der zweiten Faltstation angeordnet. Die aus der ersten Faltstation mit bereits gefalteten Seitenlappen auslaufenden Zuschnitte werden in der Vorrichtung um eine Achse senkrecht zur Förderebene gedreht, damit in der nachfolgenden Faltstation sich andere Faltlappen seitlich befinden und so mittels der üblichen Faltelemente gefaltet werden können. Im vorliegenden Ausführungsbeispiel werden die Zuschnitte um 90° gedreht, um Deckel- und/oder Bodenlappen in eine seitliche Position zu drehen, in der die zugehörige Rillinie parallel zur Förderrichtung verläuft.

Der Winkel, um den gedreht wird, hängt von dem zu verarbeitenden Zuschnitt ab. Es wird um den Winkel gedreht, mit dem die Rillinien der Faltlappen zueinander geneigt verlaufen, um die Rillinie des nächsten zu faltenden Faltlappens parallel zur Förderrichtung auszurichten; beispielsweise erfolgt bei der Herstellung von Sechseck-Schachteln eine Drehung um 60°.

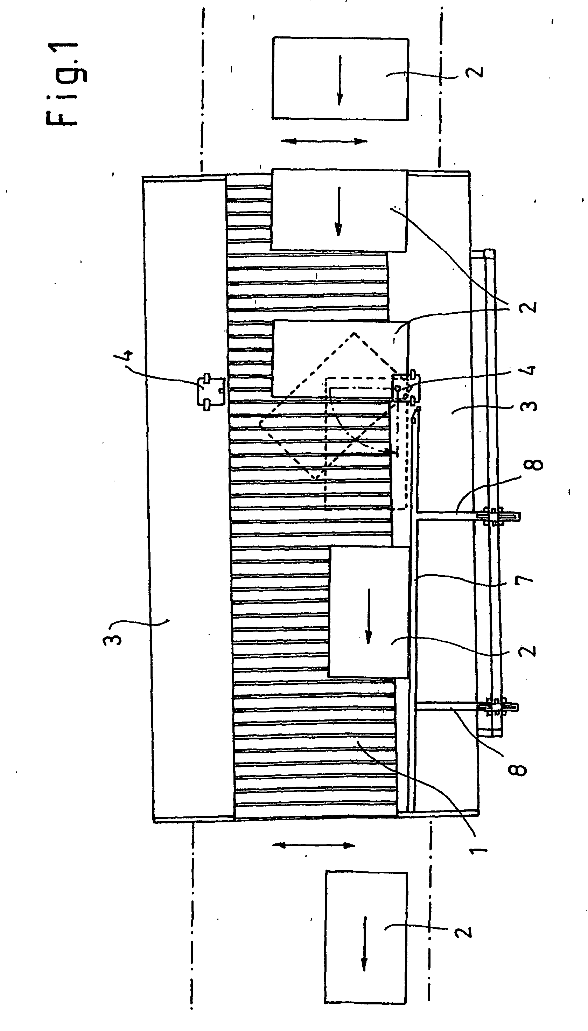

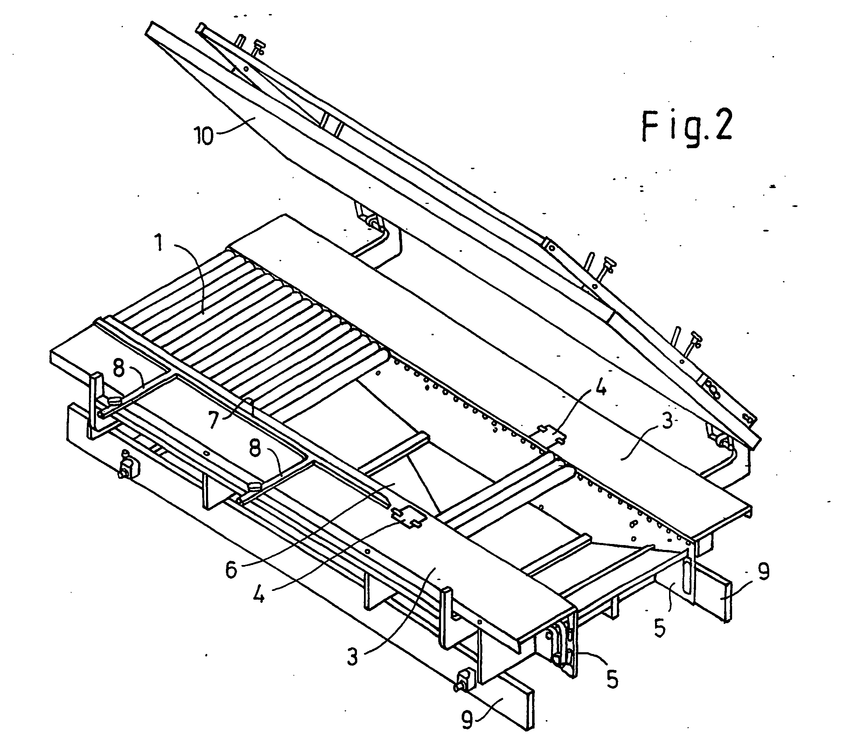

In der bevorzugten Ausführungsform nach den Figuren 1 und 2 dienen Rollen 1 als Förderelemente, die eine Förderstrecke bilden, auf der die Zuschnitte 2 flach liegend gefördert werden (in Figur 1 von rechts nach links). Die Rollen 1 sind an ihren Enden jeweils in seitlichen Rahmenteilen 5 eines Rahmens gelagert und über Antriebsmittel mit einem nicht dargestellten Drehantrieb verbunden. Die axiale Länge der Rolle 1 quer zur Förderrichtung ist etwas größer als die maximale tatsächliche Breite der Zuschnitte 2, mit der sie der Vorrichtung zugeführt werden. Die Rollen 1 sind jeweils parallel und mit geringem Abstand voneinander angeordnet, so daß die von ihnen gebildete Förderstrecke luftdurchlässig ist. Alternativ zu den Rollen 1 können als Förderelemente auch endlose Riemen verwendet werden, die dann ebenfalls luftdurchlässig gestaltet sind.

Zumindest an einer Längsseite der Vorrichtung ist unmittelbar neben der von den Rollen 1 gebildeten Förderstrecke eine Förderplatte 3 angeordnet, deren Oberfläche als reibungsarme Gleitfläche ausgebildet ist und im wesentlichen mit der Förderebene der Rollen 1 fluchtet. Bevorzugt ist an jeder Längsseite der Vorrichtung jeweils eine Förderplatte 3 jeweils an dem zugehörigen seitlichen Rahmenteil 5 befestigt, und die Förderplatte 3 erstreckt sich jeweils über die gesamte Länge der Förderstrecke, die von den Rollen 1 gebildet wird.

In der Förderplatte 3 ist jeweils zumindest ein taktweise aktivierbares Bremselement 4 am Rand zur Förderstrecke angeordnet, das bei einer Aktivierung einen über die Gleitfläche gleitenden Zuschnittsteil abbremst. Bevorzugt ist das Bremselement 4 als ein Saugelement ausgebildet, das an eine Unterdruckquelle angeschlossen ist, wobei die Saugöffnung mit der Gleitfläche fluchtet. Bevorzugt wird der Rand der Saugöffnung von einer drehbar gelagerten Ringscheibe begrenzt, deren mit der Gleitfläche fluchtende Außenfläche einen großen Reibungskoeffizent zum Zuschnitt 2 aufweist. Der über die Saugöffnung gleitende Zuschnittsteil wird so beim Einschalten der Saugluft sicher abgebremst. Die drehbar gelagerte Ringscheibe wirkt bremsend in Förderrichtung ohne einer Drehung Widerstand entgegen zu setzen. Alternativ kann als Bremselement 4 auch ein von oben gegen die Gleitfläche bewegbarer Stößel verwendet werden, der eine Rückhaltekraft auf die Zuschnitte 2 ausübt.

Der Raum unterhalb der Rollen 1 ist - wie in Figur 2 dargestellt - als Saugkammer 6 ausgebildet, die seitlich von den Rahmenteilen 5 und oben von der luftdurchlässigen Förderstrecke begrenzt wird. Die Saugkammer 6 ist an ein Sauggebläse angeschlossen, das die variable Einstellung eines Unterdrucks ermöglicht. Beim Anlegen eines Unterdrucks in der Saugkammer 6 werden die auf den Rollen 1 geförderten Zuschnitte 2 gegen die Rollen 1 gepreßt, um die Reibung zwischen den Rollen 1 und den Zuschnitten 2 zu erhöhen.

Wie in Figur 1 dargestellt, werden die Zuschnitte 2 der Vorrichtung so zugefördert, daß sie sich teilweise auf den Rollen 1 und teilweise auf der Förderplatte 3 bewegen. Wenn der sich über die Förderplatte 3 bewegende vordere Bereich des Zuschnitts 2 die Bremseinrichtung 4 erreicht, wird diese aktiviert. Der auf der Förderplatte 3 befindliche Zuschnittsteil wird abgebremst, während der auf den Rollen 1 sich befindliche Teil des Zuschnitts 2 mit höherer Geschwindigkeit weiterbewegt wird. Die von unten aus der Saugkammer 6 wirkende Saugkraft gewährleistet dabei, daß der Zuschnitt 2 nicht als Gesamtes abgebremst wird, sondern die in Figur 1 dargestellte Drehbewegung um eine Achse senkrecht zur Förderebene durchführt.

Die Drehbewegung des Zuschnitts 2 endet vor einer hinter dem Bremselement 4 angeordneten Ausrichtleiste 7, die auf der Gleitfläche der Förderplatte 3 sich in Förderrichtung erstreckend angeordnet ist. Die Ausrichtleiste 7 ist an ihrer Rückseite an zwei Haltern 8 befestigt, die quer zur Förderrichtung verstellbar sind. Dies ermöglicht es, die Ausrichtleiste 7 sowohl in ihrem Abstand zum Rand der Förderstrecke, also zum Ende der Rollen 1, als auch in einem bestimmten Winkel zur Förderrichtung der Rollen 1 einzustellen.

Bevorzugt ist der Rahmen 5 mit den Rollen 1 und der Förderplatte 3 in dem Gestell 9 so verstellbar gelagert, daß die Förderstrecke der Rollen 1 in einen spitzen Winkel zur Förderrichtung der Zuschnitte 2 in der nachfolgenden Bearbeitungsstation einstellbar ist. Wird die Ausrichtleiste 7 exakt in der Förderrichtung der nachfolgenden Bearbeitungsstation ausgerichtet, so werden die Zuschnitte 2 exakt ausgerichtet der nachfolgenden Bearbeitungsstation, beispielsweise einer Faltstation, zugeführt. Die leicht schräggestellten Rollen 1 fördern die Zuschnitte 2 dabei mit einer kleinen Kraftkomponente in Richtung zur Ausrichtleiste 7.

Um die bereits in der vorhergehenden Faltstation umgelegten Faltlappen beim Durchlauf durch die Drehvorrichtung nach unten zu halten, damit sie sich nicht wieder öffnen, ist oberhalb der Förderstrecke ein plattenförmiger Niederhalter 10 angeordnet, der nach unten in eine Position parallel zur Förderebene schwenkbar an einer Seite des Rahmens 5 befestigt ist. Bevorzugt ist der Niederhalter 10 so gestaltet, daß er die Förderstrecke der Rollen 1 und die Gleitflächen der Förderplatten 3 in abgeschwenkter Position abdeckt. Die Innenfläche des Niederhalters 10 ist reibungsarm gestaltet, damit die niedergehaltenen Zuschnittsteile ohne merklichen Reibungswiderstand unter ihn gleiten können. Während des Betriebs der Vorrichtung wird der Niederhalter 10 in einem der Zuschnittsdicke angepaßten Abstand zur Förderstrecke 1 eingestellt. Zur Anpassung an verschiedene Schachteldicken ist er bevorzugt so gestaltet, daß sein Abstand zur Förderstrecke 1 in abgeschwenkter Position verstellbar ist.

In der Zeichnung ist die bevorzugte Ausführungsform dargestellt, bei der beidseits der von den Rollen 1 gebildeten Förderstrecke jeweils eine Förderplatte 3 vorhanden ist. Auch die zweite Förderplatte 3 enthält eine Bremseinrichtung 4, so daß - je nach Schachtelformat.- eine Drehung gegen den Uhrzeigersinn - wie in Figur 1 dargestellt - oder im Uhrzeigersinn mittels der anderen Bremsvorrichtung 4 durchgeführt werden kann. Falls die andere Bremsvorrichtung 4 benutzt werden soll, wird die Zufuhr der Zuschnitte 2 so eingestellt, daß sie teilweise über die Gleitfläche der in Figur 1 oberen Förderplatte 3 gleiten.

Falls die Vorrichtung es ermöglichen soll, die Zuschnitte 2 um mehr als 90°, beispielsweise um 180° zu drehen, wird in der Gleitfläche der Förderplatte 3 eine zweite Bremseinrichtung 4 mit einem Abstand in Förderrichtung von der ersten Bremseinrichtung 4 angeordnet. Die Ausrichtleiste 7 wird dann im Bereich der zweiten Bremsvorrichtung 4 angeordnet, oder es sind zwei Ausrichtleisten 7 jeweils mit kurzem Abstand hinter der jeweiligen Bremseinrichtung 4 angeordnet. Ein durchlaufender Zuschnitt 2 wird dann nach der ersten Drehung um einen vorgegebenen Winkel mittels der zweiten Bremseinrichtung 4 erneut gedreht, um eine zweite Rillinie in Längsrichtung zu bringen.

Bevorzugt wird das taktweise Einschalten der Bremseinrichtung 4 über eine Fotozelle gesteuert, von der die Vorderkante eines in die Vorrichtung einlaufenden Zuschnitts 2 detektiert wird. In Abhängigkeit von der Schachtellänge und der Fördergeschwindigkeit wird nach einem vorgegebenen Zeitintervall die Bremseinrichtung 4 eingeschaltet. Das Zeitintervall ist dabei so gewählt, daß sich beim Einschalten der vordere Teil des Zuschnitts 2 über der Bremseinrichtung 4 befindet. Die Bremseinrichtung 4 wird anschließend solange aktiv gehalten, bis der Zuschnitt 2 die gewünschte Drehung (beispielsweise um 90°) durchgeführt hat. Anschließend wird sie wieder inaktiviert, bis der nächste Zuschnitt 2 sich mit seinem vorderen Teil oberhalb von ihr befindet.

## Patentansprüche

1. Vorrichtung zum Drehen flacher Gegenstände (1), insbesondere von Faltschachtelzuschnitten, mit
- Förderelementen (1), die eine luftdurchlässige Förderstrecke bilden und auf denen die Gegenstände (1) flachliegend gefördert werden,
- einer von unten durch die Förderstrecke wirkenden Saugeinrichtung (6) zur Erhöhung der Reibung zwischen den Förderelementen (1) und den Gegenständen (2) und
- mit Mitteln zum Drehen der Gegenstände (2) um eine Achse senkrecht zur Förderebene, wobei die Förderelemente (1) nur eine Förderstrecke bilden,
**dadurch gekennzeichnet, daß** zumindest an einer Seite neben der Förderstrecke eine im wesentlichen mit der Förderebene fluchtende Gleitfläche (3) verläuft, in der ein taktweise aktivierbares Bremselement (4) angeordnet ist, mit dem ein über die Gleitfläche (3) gleitendes Teil des Zuschnitts (2) abbremsbar ist.

2. Vorrichtung nach Anspruch 1, **dadurch gekennzeichnet, daß** das Bremselement (4) als Saugelement ausgebildet ist, dessen Saugöffnung mit der Gleitfläche (3) fluchtet.

3. Vorrichtung nach Anspruch 2, **dadurch gekennzeichnet, daß** der Rand der Saugöffnung des Saugelementes von einer drehbar gelagerten Ringscheibe begrenzt wird, deren mit der Gleitfläche (3) fluchtende Außenfläche einen großen Reibungskoeffizienten zum Zuschnitt (2) aufweist.

4. Vorrichtung nach einem der Ansprüche 1 bis 3, **dadurch gekennzeichnet, daß** auf der Gleitfläche (3) eine sich in Förderrichtung erstreckende Ausrichtleiste (7) angeordnet ist.

5. Vorrichtung nach Anspruch 4, **dadurch gekennzeichnet, daß** die Ausrichtleiste (7) in ihrem Abstand zum Rand der Förderstrecke und zugleich in einem bestimmten Winkel zur Förderrichtung der Förderelemente (1) einstellbar ist.

6. Vorrichtung nach einem der Ansprüche 1 bis 5, **dadurch gekennzeichnet, daß** der Raum unterhalb der Förderstrecke der Förderelemente (1) als Saugkammer (6) ausgebildet ist, an die ein Sauggebläse angeschlossen ist.

7. Vorrichtung nach einem der Ansprüche 1 bis 6, **dadurch gekennzeichnet, daß** oberhalb der Förderstrecke ein plattenförmiger Niederhalter (10) angeordnet ist, der nach unten in eine Position parallel zur Förderebene schwenkbar ist, und der in abgeschwenkter Position die Förderstrecke der Förderelemente (1) und die Gleitflächen abdeckt.

8. Vorrichtung nach einem der Ansprüche 1 bis 7, **dadurch gekennzeichnet, daß** die Förderelemente (1) und die Gleitfläche (3) in einem Rahmen (5) gelagert sind, der in einen spitzen Winkel zur Förderrichtung der Zuschnitte (2) in der nachfolgenden Bearbeitungsstation einstellbar ist.

9. Vorrichtung nach einem der Ansprüche 1 bis 8, **dadurch gekennzeichnet, daß** beidseits der von den Förderelementen (1) gebildeten Förderstrecke jeweils eine Gleitfläche (3) angeordnet ist.

10. Vorrichtung nach einem der Ansprüche 1 bis 9, **dadurch gekennzeichnet, daß** in einer Gleitfläche (2) eine zweite Bremseinrichtung mit einem Abstand in Förderrichtung von der ersten Bremseinrichtung (4) angeordnet ist.

## Claims

1. Device for rotating flat objects (1), in particular carton blanks, comprising
- conveying elements (1) forming a conveying line that is permeable to air and conveys the objects (1) lying flat,
- a suction device (6) acting through the conveying line from below to increase friction between the conveying elements (1) and the objects (2), and
- means for rotating the objects (2) about an axis perpendicular to the conveying plane, the conveying elements (1) forming only a single conveying line,
**characterized in**
**that** a slide surface (3) is arranged at least on one side adjacent to the conveying line so as to be substantially aligned with the conveying plane, the slide surface (3) including a cyclically activatable braking element (4) for decelerating a blank (2) section sliding over the slide surface (3).

2. Device according to claim 1,
**characterized in**
**that** the braking element (4) is designed as a suction element, the suction opening of which is aligned with the slide surface (3).

3. Deice according to claim 2,
**characterized in**
**that** the edge of the suction opening of the suction element is limited by an annular disk, which is supported to be rotatable and the outer surface of which is aligned with the slide surface (3) and has a high coefficient of friction with the blank (2).

4. Device according to one of claims 1 to 3,
**characterized in**
**that** an alignment rod (7) extending in the conveying direction is arranged on the slide surface (3).

5. Device according to claim 4,
**characterized in**
**that** the distance between the alignment rod (7) and the edge of the conveying line and the angle between the alignment rod (7) and the conveying direction of the conveying elements (1) are adjustable.

6. Device according to one of claims 1 to 5,
**characterized in**
**that** the space below the conveying line of the conveying elements (1) is designed as a suction chamber (6) connected to a suction blower.

7. Device according to one of claims 1 to 6,
**characterized in**
**that** a plate-shaped hold-down element (10) is arranged above the conveying line, the hold-down element (10) being pivotable downward into a position parallel to the conveying plane and covering, in its lowered position, the conveying line of the conveying elements (1) and the slide surfaces.

8. Device according to one of claims 1 to 7,
**characterized in**
**that** the conveying elements (1) and the slide surface (3) are supported in a frame (5) adjustable to form an acute angle with the conveying direction of the blanks (2) in the downstream processing station.

9. Device according to one of claims 1 to 8,
**characterized in**
**that** a respective slide surface (3) is formed on both sides of the conveying line formed by the conveying elements (1).

10. Device according to one of claims 1 to 9,
**characterized in**
**that** a second braking device is arranged in a slide surface (2) at a distance to the first braking device (4) as viewed in the conveying direction.

## Revendications

1. Dispositif servant à faire pivoter des objets plats (1), en particulier des éléments découpés de boîtes pliantes, comprenant :
- des éléments de transport (1) qui forment une voie de transport perméable à l'air et sur lesquels les objets (2) sont transportés à plat,
- un dispositif d'aspiration (6) agissant depuis le bas, à travers la voie de transport, et servant à augmenter le frottement entre les éléments de transport (1) et les objets (2), et
- des moyens servant à faire pivoter les objets (2) autour d'un axe, perpendiculairement au plan de transport, où les éléments de transport (1) ne forment qu'une voie de transport,
**caractérisé en ce qu'**une surface de glissement (3), pratiquement alignée avec le plan de transport, s'étend au moins sur un côté, à proximité de la voie de transport, surface de glissement dans laquelle est disposé un élément de freinage (4) pouvant être activé de manière cyclique, élément de freinage avec lequel on peut freiner une partie de l'élément découpé (2) glissant sur la surface de glissement (3).

2. Dispositif selon la revendication 1, **caractérisé en ce que** l'élément de freinage (4) est conçu comme un élément d'aspiration dont l'ouverture d'aspiration est alignée avec la surface de glissement (3).

3. Dispositif selon la revendication 2, **caractérisé en ce que** le bord de l'ouverture d'aspiration de l'élément d'aspiration est délimité par une plaque annulaire montée en rotation, plaque annulaire dont la surface extérieure alignée avec la surface de glissement (3) présente un important coefficient de frottement par rapport à l'élément découpé (2).

4. Dispositif selon l'une quelconque des revendications 1 à 3, **caractérisé en ce qu'**une bordure d'alignement (7) s'étendant dans la direction de transport est disposée sur la surface de glissement (3).

5. Dispositif selon la revendication 4, **caractérisé en ce que** la bordure d'alignement (7) est réglable concernant sa distance par rapport au bord de la voie de transport et, en même temps, suivant un angle déterminé par rapport à la direction de transport des éléments de transport (1).

6. Dispositif selon l'une quelconque des revendications 1 à 5, **caractérisé en ce que** l'espace placé au-dessous de la voie de transport des éléments de transport (1) est conçu comme une chambre d'aspiration (6) à laquelle est raccordé un ventilateur aspirant.

7. Dispositif selon l'une quelconque des revendications 1 à 6, **caractérisé en ce qu'**un presse-produits (10), en forme de plaque, est disposé au-dessus de la voie de transport, lequel presse-produits peut pivoter vers le bas, dans une position parallèle au plan de transport et qui, en position rabattue, recouvre la voie de transport des éléments de transport (1) et les surfaces de glissement.

8. Dispositif selon l'une quelconque des revendications 1 à 7, **caractérisé en ce que** les éléments de transport (1) et la surface de glissement (3) sont montés dans un cadre (5) qui, suivant un angle aigu par rapport à la direction de transport des éléments découpés (2), est réglable dans le poste de traitement qui suit.

9. Dispositif selon l'une quelconque des revendications 1 à 8, **caractérisé en ce qu'**une surface de glissement (3) est disposée, respectivement, des deux côtés de la voie de transport formée par les éléments de transport (1).

10. Dispositif selon l'une quelconque des revendications 1 à 9, **caractérisé en ce que**, dans une surface de glissement (3), un second dispositif de freinage est disposé, dans la direction de transport, à distance du premier dispositif de freinage (4).
